# EUROPÄISCHE PATENTSCHRIFT

(11) **EP 0 692 723 B1**
(45) Veröffentlichungstag und Bekanntmachung des Hinweises auf die Patenterteilung: **02.10.2002**
(21) Anmeldenummer: 95108811.1
(22) Anmeldetag: 08.06.1995
(51) Int. Cl.: G02B 6/36

(54) **Vorrichtung zum Halten einer mikrooptischen Komponente**
Device for fixing micro-optical components
Dispositif pour la fixation d'une composante micro-optique

(30) Priorität: 08.07.1994 DE 4424017
(43) Veröffentlichungstag der Anmeldung: 17.01.1996
(73) Patentinhaber: ROBERT BOSCH GMBH, 70442 Stuttgart (DE)
(72) Erfinder: Warth, Martin, D-71409 Schwaikheim (DE)

(56) Entgegenhaltungen:
- DE-A- 4 230 087
- PATENT ABSTRACTS OF JAPAN vol. 8, no. 92 (P-271), 27.April 1984 & JP 59 007913 A (FUJITSU K.K.), 17.Januar 1984,
- GRAND G ET AL: "NEW METHOD FOR LOW COST AND EFFICIENT OPTICAL CONNECTIONS BETWEEN SINGLEMODE FIBRES AND SILICA GUIDES" ELECTRONICS LETTERS, Bd. 27, Nr. 1, 3.Januar 1991, Seiten 16-18, XP000202529
- K.E. PETERSEN: "Silicon as a mechanical material" PROCEEDINGS OF THE IEEE., Bd. 70, Nr. 5, Mai 1982, NEW YORK US, Seiten 420-457, XP002045285

## Beschreibung

Die vorliegende Erfindung betrifft eine Vorrichtung zum Halten einer mikrooptischen Komponente, wobei die Vorrichtung eine Trägerplatte aufweist, bei der auf einer Oberfläche eine Vertiefung vorgesehen ist, in die die mikrooptische Komponente einlegbar ist.

Vorrichtungen dieser Art werden häufig verwendet, um z.B. eine Glasfaser an eine optoelektronische Schaltung, die sich auf der Trägerplatte befindet, anzukoppeln. Ausführungsbeispiele hierfür sind in der EP 538 633 A1 und in K.E. Petersen: "Silicon as a Mechanical Material", Proceedings of the IEEE, Vol. 70, No. 5, 1982, S. 432f, beschrieben.

Aus der EP 0 538 633 A1 ist ein Element zur Kopplung einer optischen Faser mit einem integrierten optischen Wellenleiter bekannt. Die optische Faser ist in einer V-Nut angeordnet. Der integrierte Wellenleiter befindet sich auf einer Maskenstruktur, die über das Ende der V-Nut übersteht, und durch die der Wellenleiter bis an die Endfläche der optischen Faser herangeführt wird. Das Überstehen der Maskenstruktur wird durch Unterätzen erreicht.

Aus der DE 41 06 287 A1 ist ein Verfahren zum anisotropen Ätzen von monokristallinen, scheibenförmigen Trägern bekannt. Mit diesem können durch gezieltes Unterätzen Strukturelemente, wie Membranen oder Durchgangsöffnungen, erzeugt werden.

Für eine effiziente Ankopplung der Faser an eine optoelektronische Schaltung muß die Faser in der Vertiefung sehr genau justiert werden. Beim Einlegen der Faser in die Vertiefung entsteht aber das Problem, dass die Faser, wenn das Faserende an das Ende der Vertiefung anstößt, sich aufwölbt bzw. verbiegt. Außerdem kann die Faser beim Justieren aus der Vertiefung herausrutschen.

Aus der JP-A-59 007 913 ist bereits eine Vorrichtung bekannt, bei der eine optische Faser von einer Struktur in einer Vertiefung gehalten wird.

Die Aufgabe der vorliegenden Erfindung ist es, eine Vorrichtung der eingangs genannten Art anzugeben, durch die eine mikrooptische Komponente gehalten wird. Dazu wird eine elastische, die Vertiefung überspannende Brückenstruktur vorgesehen.

Diese Aufgabe wird erfindungsgemäß durch die Merkmale des Anspruchs 1 gelöst. Vorteilhafte Ausführungsformen gehen aus den Unteransprüchen hervor.

Die Herstellung dieser Sttruktur kann vorteilhafterweise durch anisotropes Ätzen in Verbindung mit einer lokalen Erhöhung der lateralen Unterätzung bewirkt werden.

Durch die Struktur kann z.B. eine optische Faser in einer V-Nut gehalten werden. Durch eine geeignete Dimensionierung der V-Nut kann die Glasfaser relativ lose in der V-Nut liegen, oder sie kann durch die Struktur fixiert weren, indem die Struktur die Glasfaser überspannt und durch elastische Kräfte in die V-Nut drückt.

Die Struktur kann so dimensioniert werden, dass eine Aufwölbung der Faser vermieden wird. Anstatt einer Faser können aber auch andere mikrooptische Komponenten, z.B. zylindrische Linsen, mittels der Vorrichtung gehalten werden.

Ausführungsbeispiele der Erfindung werden anhand der schematischen Zeichnungen erläutert.

Es zeigen:
Figur 1 in einer Aufsicht eine Vorrichtung mit zwei eine Vertiefung überspannenden Brückenstrukturen,
Figur 2 eine Vorrichtung mit einer überstehenden Klemmstruktur im Querschnitt,
Figur 3 Vertiefungen mit einer überspannenden Brückenstruktur im Querschnitt, und

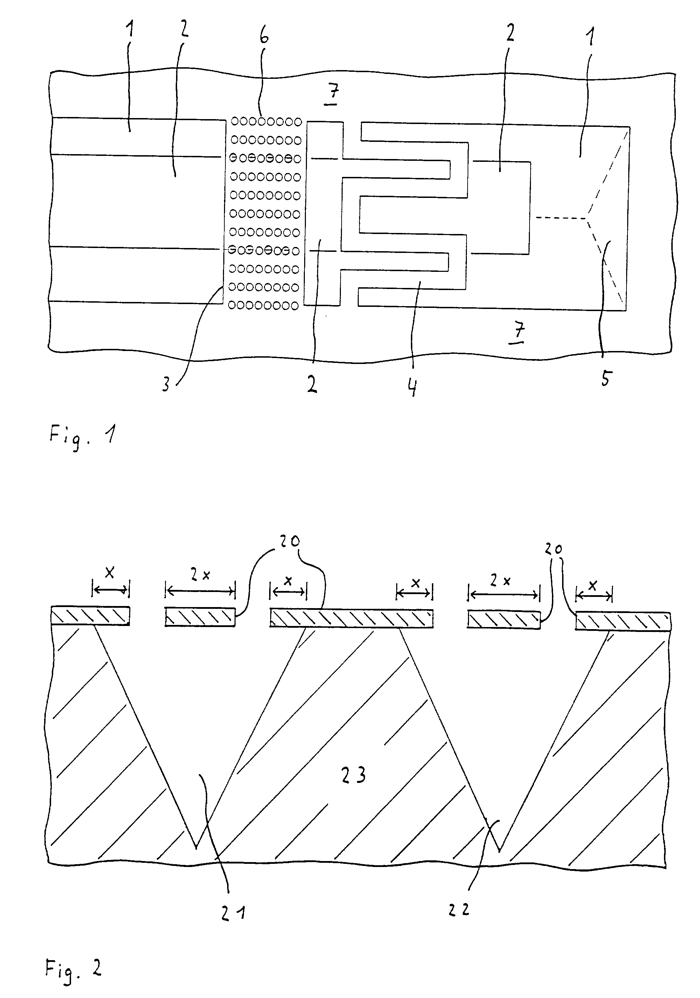

In der Figur 1 ist in einer Aufsicht eine Vertiefung 1, in diesem Ausführungsbeispiel eine V-Nut 1, dargestellt, in die eine Glasfaser 2 eingelegt ist. Die Glasfaser 2 ist unter einer netzförmigen Brückenstruktur 3 und einer mäanderförmigen Brückenstruktur 4 durchgeschoben bis fast an das Ende 5 der V-Nut 1. Durch die runden Maschen 6 ist die Brückenstruktur 3 elastisch, sie überspannt die V-Nut 1 und hält dadurch die Faser 2. Eine besonders hohe Elastizität erreicht die mäanderförmige Brückenstruktur 4. Anstatt von runden Maschen 6 können auch rechteckige oder rautenförmige Maschen verwendet werden, um eine bestimmte Elastizität zu erreichen.

Die V-Nut 1 kann so dimensioniert sein, daß die Glasfaser 2 leicht unter den Brückenstrukturen 3 und/oder 4 durchgeschoben und justiert werden kann. Zur endgültigen Fixierung der Glasfaser 2 kann dann ein Klebstoff verwendet werden. Die V-Nut 1 kann aber auch so dimensioniert sein, daß die Brückenstrukturen 3 und/oder 4 die Glasfaser überspannen und durch elastische Kräfte in der V-Nut 1 fest andrücken. Damit wird eine dauerelastische Fixierung der Glasfaser 2 erreicht.

Die V-Nut 1 kann beispielsweise durch anisotropes Ätzen auf einer (100)-Oberfläche einer Siliziumscheibe 7 erzeugt werden. Die Brückenstrukturen 3 und 4 entstehen durch gezielte Unterätzungen beispielsweise einer Ätzmaske. Durch die Maschen 6 können großflächig unterätzte Strukturen hergestellt werden. Die Siliziumscheibe 7 dient gleichzeitig als Trägerplatte 7 für optoelektrische Schaltungen.

In der Figur 2 ist ein Ausführungsbeispiel einer grabenüberspannenden Struktur 20 dargestellt, die durch einfache Unterätzung hergestellt werden kann. In einer Trägerplatte 23 sind zwei V-Nuten 21 und 22 geätzt. Die grabenüberspannende Struktur 20 ist beispielsweise eine mäanderförmige Brückenstruktur.

Das Maß der lateralen Unterätzung ist mit x bezeichnet. Um vollständig ausgebildete V-Nuten 21 und 22 zu erhalten, müssen die Abmessungen der Struktur 20 in einer Dimension kleiner/gleich 2x betragen. Die laterale Unterätzung x beträgt z.B. ca. 1-2 % der Tiefenätzung. Damit werden bei Ätztiefen von 200 µm noch Strukturen von 4 - 8 µm vollständig unterätzt.

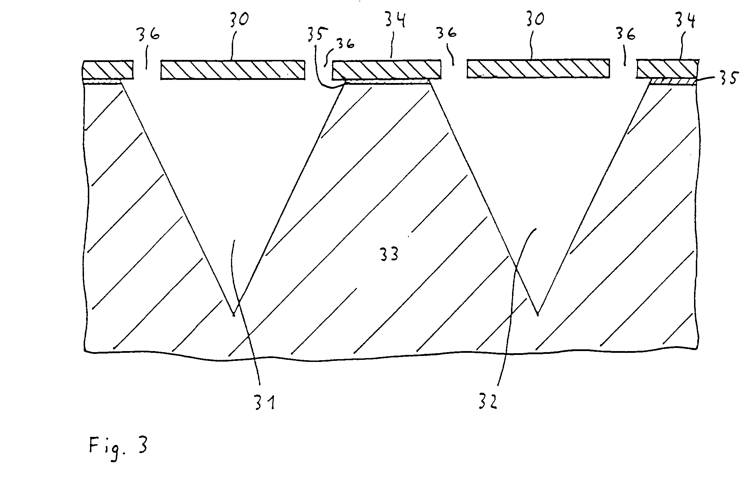

Durch eine lokale Erhöhung der lateralen Unterätzung können großflächige Strukturen 30, wie in der Figur 3 dargestellt, hergestellt werden. Die V-Nuten 31, 32 werden dabei auch bei einer erheblichen Überdeckung durch die großflächigen Strukturen 30 vollständig ausgebildet. Hierfür wird in einem Verfahren zuerst auf der Oberfläche einer Siliziumscheibe 33 mit (100)-Kristallorientierung eine dünne thermische Oxidschicht 35 gebildet. Die Oxidschicht 35 wird anschließend strukturiert und in dem Bereich der V-Nut weggeätzt. Im nächsten Schritt wird eine Polysiliziumschicht (oder amorphes Silizium) auf der Siliziumscheibe abgeschieden. Die Polysiliziumschicht wird anschließend strukturiert und bis auf die Bereiche über den V-Nuten 31, 32 weggeätzt. Das verbleibende Polysilizium wird danach teilweise oxidiert und anschließend wird eine Siliziumnitridschicht 30, 34 auf der Siliziumscheibe 33 abgeschieden. Im nächsten Schritt wird die Siliziumnitridschicht 30, 34 strukturiert und Bereiche 36 weggeätzt, durch die die großflächigen Strukturen 30 definiert werden. Durch die Bereiche 36 hindurch kann anschließend das Polysilizium und die Siliziumscheibe 33 geätzt werden. Hierfür wird ein anisotropes Ätzmittel verwendet. Dieses löst die teilweise oxidierte Polysiliziumschicht sehr schnell auf und ätzt anschließend die V-Nuten 31, 32 in die Siliziumscheibe 33. An den (111)-Flächen, die die Seitenwände der V-Nuten 31, 32 definieren, kommt der Ätzprozeß praktisch zum Stillstand. Durch das schnelle Auflösen der teilweise oxidierten Polysiliziumschicht werden die großflächigen Strukturen 30 vollständig unterätzt. - Anstatt einer Siliziumnitridschicht kann auch ein gegen ein anisotropes Ätzmittel resistentes Metall verwendet werden.

## Patentansprüche

1. Vorrichtung zum Halten einer mikrooptischen Komponente, insbesondere einer optischen Faser, wobei die Vorrichtung eine Trägerplatte (7) aufweist, bei der auf einer Oberfläche eine Vertiefung vorgesehen ist, in die die mikrooptische Komponente einlegbar ist, wobei die Oberfläche der Trägerplatte (7,23,33) eine Schicht Struktur (3, 4, 20, 30) aufweist, die derart ausgebildet ist, daß sie die mikrooptische Komponente (2) in der Vertiefung hält, **dadurch gekennzeichnet, daß** die Struktur (3, 4, 20, 30) als die Vertiefung überspannende Brückenstruktur ausgebildet ist.

2. Vorrichtung nach Anspruch 1, **dadurch gekennzeichnet, dass** die Struktur (3, 4, 20, 30) netzförmig ist mit runden, rechteckigen oder rautenförmigen Maschen.

3. Vorrichtung nach Anspruch 1, **dadurch gekennzeichnet, dass** die Struktur (3, 4, 20, 30) mäanderförmig oder spiralförmig ist.

4. Vorrichtung nach einem der vorhergehenden Ansprüche, **dadurch gekennzeichnet, dass** die Struktur (3, 4, 20, 30) durch gezielte Unterätzung erzeugt ist.

5. Vorrichtung nach einem der vorhergehenden Ansprüche, **dadurch gekennzeichnet, dass** eine strukturierte Ätzmaske, die zur Herstellung der Vertiefungen dient, die Struktur (3, 4, 20, 30) bildet.

6. Vorrichtung nach einem der vorhergehenden Ansprüche, **dadurch gekennzeichnet, dass** die Trägerplatte (7, 23, 33) aus Silizium und die Struktur (3, 4, 20, 30) aus einem Nitrid ist.

## Claims

1. Device for fixing a micro-optical component, in particular an optical fibre, the device having a support plate (7), in which a depression into which the micro-optical component can be placed is provided on one surface, the surface of the support plate (7, 23, 33) having a layer structure (3, 4, 20, 30) which is formed in such a way that it fixes the micro-optical component (2) in the depression, **characterized in that** the structure (3, 4, 20, 30) is formed as a bridge structure spanning the depression.

2. Device according to Claim 1, **characterized in that** the structure (3, 4, 20, 30) is in the form of a network with round, rectangular or diamond-shaped meshes.

3. Device according to Claim 1, **characterized in that** the structure (3, 4, 20, 30) has a meandering or spiral form.

4. Device according to one of the preceding claims, **characterized in that** the structure (3, 4, 20, 30) is produced by targeted undercutting by etching.

5. Device according to one of the preceding claims, **characterized in that** a structured etching mask which serves for producing the depressions forms the structure (3, 4, 20, 30).

6. Device according to one of the preceding claims, **characterized in that** the support plate (7, 23, 33) is made of silicon and the structure (3, 4, 20, 30) is made of a nitride.

## Revendications

1. Dispositif pour obtenir un composant de micro-optique notamment une fibre optique,
ce composant ayant une plaque support (7) dont la surface présente une cavité recevant le composant micro-optique,
la surface de la plaque support (7, 23, 33) ayant une structure de couches (3, 4, 20, 30) qui est réalisée pour retenir le composant de micro-optique (2) dans la cavité,
**caractérisé en ce que**
la structure (3, 4, 20, 30) est une structure en forme de pont chevauchant la cavité.

2. Dispositif selon la revendication 1, c
**caractérisé en ce que**
la structure (3, 4, 20, 30) est en forme de réseau avec des mailles rondes, rectangulaires ou en losange.

3. Dispositif selon la revendication 1,
**caractérisé en ce que**
la structure (3, 4, 20, 30) est en forme de méandre ou de spirale.

4. Dispositif selon l'une quelconque des revendications précédentes,
**caractérisé en ce que**
la structure (3, 4, 20, 30) est réalisée par une gravure en contre dépouille, précise.

5. Dispositif selon l'une quelconque des revendications précédentes,
**caractérisé en ce qu'**
un masque de gravure, structuré qui sert à fabriquer les cavités constitue la structure (3, 4, 20, 30).

6. Dispositif selon l'une quelconque des revendications précédentes,
**caractérisé en ce que**
la plaque support (7, 23, 33) est en silicium et la structure (3, 4, 20, 30) est en nitrure.
